# EUROPEAN PATENT APPLICATION

(11) **EP 4 656 475 A1**
(43) Date of publication of application: **03.12.2025**
(21) Application number: 24777577.8
(22) Date of filing: 22.02.2024
(51) Int. Cl.: B60W 20/50, B60W 20/15

(54) **DRIVING SYSTEM CONTROL METHOD, DRIVING SYSTEM, APPARATUS, MEDIUM, AND VEHICLE**

(30) Priority: 27.03.2023 CN 202310350607
(71) Applicant: BYD Company Limited, Shenzhen, Guangdong 518118 (CN)
(72) Inventor: LIU, Wei, Shenzhen, Guangdong 518118 (CN); XU, Luhui, Shenzhen, Guangdong 518118 (CN); DU, Zhiyong, Shenzhen, Guangdong 518118 (CN)
(74) Representative: Taor, Simon Edward William
(86) International application number: PCT/CN2024/078178
(87) International publication number: WO 2024/198786

(57) **Abstract**

The present disclosure relates to a control method for a drive system, a drive system, an apparatus, a medium, and a vehicle. The method is applied to a microcontroller unit of the drive system, and includes: obtaining electrical signals corresponding to a plurality of power drive devices in the drive system; determining, based on the electrical signals, a quantity of faulty power drive devices; and controlling the plurality of power drive devices to output drive signals when the quantity of faulty power drive devices is less than or equal to a preset quantity threshold.

## Description

### CROSS-REFERENCE TO RELATED APPLICATIONS

The present disclosure claims priority to Chinese Patent Application No. 202310350607.1, filed with the China National Intellectual Property Administration on March 27, 2023 and entitled "CONTROL METHOD FOR DRIVE SYSTEM, DRIVE SYSTEM, APPARATUS, MEDIUM, AND VEHICLE", which is incorporated herein by reference in its entirety.

### TECHNICAL FIELD

The present disclosure relates to the technical field of vehicle control, and specifically, to a control method for a drive system, a drive system, an apparatus, a medium, and a vehicle.

### BACKGROUND

In related technologies, a vehicle includes a plurality of power drive devices which provide power for a drive system of the vehicle. When one of the power drive devices reports a failure, the entire drive system is shut down, resulting in the inability to continue driving. However, in fact, two power drive devices can still support normal operation of the drive system and driving.

### SUMMARY

To overcome problems in related technologies, the present disclosure provides a control method for a drive system, a drive system, an apparatus, a medium, and a vehicle.

A first aspect of embodiments of the present disclosure provides a control method for a drive system, applied to a microcontroller unit of the drive system, including:
obtaining electrical signals corresponding to a plurality of power drive devices in the drive system;
determining, based on the electrical signals, a quantity of faulty power drive devices; and
controlling the plurality of power drive devices to output drive signals when the quantity of faulty power drive devices is less than or equal to a preset quantity threshold.

Optionally, the method further includes:
controlling the plurality of power drive devices to stop outputting drive signals when the quantity of faulty power drive devices is greater than the preset quantity threshold.

Optionally, controlling the plurality of power drive devices to stop outputting the drive signals when the quantity of faulty power drive devices is greater than the preset quantity threshold includes:
stopping outputting control signals to the plurality of power drive devices when the quantity of faulty power drive devices is greater than the preset quantity threshold, to control the plurality of power drive devices to stop outputting the drive signals.

Optionally, controlling the plurality of power drive devices to output the drive signals when the quantity of faulty power drive devices is less than or equal to the preset quantity threshold includes:
sending control signals to the plurality of power drive devices when the quantity of faulty power drive devices is less than or equal to the preset quantity threshold, to control the plurality of power drive devices to output the drive signals.

Optionally, obtaining the electrical signals corresponding to the plurality of power drive devices in the drive system includes:
receiving voltage signals generated by a plurality of programming modules based on current signals sent by the power drive devices.

Optionally, the method further includes:
receiving fault signals sent by the plurality of programming modules; and
controlling, based on the received fault signal, the plurality of power drive devices to stop outputting the drive signals, where
the fault signal is output by the programming module to the microcontroller unit when the electrical signal of the power drive device received by the programming module is not within a preset electrical signal threshold range.

Optionally, controlling the plurality of power drive devices to output the drive signals when the quantity of faulty power drive devices is less than or equal to the preset quantity threshold includes:
determining, based on the electrical signal sent by each programming module, a target programming module corresponding to a faulty power drive device when the quantity of faulty power drive devices is less than or equal to the preset quantity threshold; and
sending a target control signal to the target programming module, so that the target programming module stops, in response to the target control signal, outputting the fault signal and outputs a normal signal, to control the plurality of power drive devices to output the drive signals.

Optionally, the method includes:
sending the preset electrical signal threshold to the programming module.

A second aspect of the embodiments of the present disclosure provides a drive system, including:
a plurality of power drive devices, configured to output drive signals;
a plurality of programming modules, where each programming module is correspondingly connected to one power drive device, and each programming module is configured to receive an electrical signal sent by the power drive device connected to the programming module; and
a microcontroller unit, configured to determine a quantity of faulty power drive devices based on the electrical signals sent by the plurality of programming modules, and control the plurality of power drive devices to output drive signals when the quantity of faulty power drive devices is less than or equal to a preset quantity threshold.

Optionally, the microcontroller unit includes a program running module and a switch control module, where an output end of the program running module is connected to an input end of the switch control module, and an output end of the switch control module is connected to input ends of the plurality of power drive devices;
the program running module is configured to output control signals, where the control signal is used to enable the power drive device to output the drive signal in response to the control signal; and
the switch control module is configured to control a connection/disconnection status of a path between the program running module and the power drive device, so as to determine, based on the connection/disconnection status, whether to transmit the control signals to the plurality of power drive devices.

Optionally, a first signal input end of each programming module is connected to a first output end of the program running module, a first signal output end of each programming module is connected to a signal input end of the microcontroller unit, a second signal input end of each programming module is connected to a signal output end of one power drive device, and a second signal output end of each programming module is connected to an input end of the switch control module;
the programming module is configured to output a fault signal when the electrical signal sent by the power drive device is not within a preset electrical signal threshold range; and
the switch control module is configured to disconnect the path between the program running module and the power drive device when the fault signal output by at least one of the programming modules is received, to control the plurality of power drive devices to stop outputting the drive signals.

Optionally, the switch control module includes a plurality of first switch modules and an AND gate circuit module, where input ends of the plurality of first switch modules are connected to the output end of the program running module, an output end of each first switch module is connected to an input end of one power drive device, an output end of the AND gate circuit module is connected to control ends of the plurality of first switch modules, and an input end of the AND gate circuit module is connected to the second signal output end of each programming module; and
the AND gate circuit module is configured to control the first switch module, when the fault signal output by at least one of the programming modules is received, to disconnect the path between the program running module and the power drive device.

Optionally, the programming module includes a signal conversion module and a threshold comparison module, where an input end of the signal conversion module is connected to a signal output end of the power drive device, an output end of the signal conversion module is connected to an input end of the threshold comparison module, and an output end of the threshold comparison module is connected to the input end of the switch control module;
the signal conversion module is configured to receive a current signal sent by the power drive device, and convert the current signal into a voltage signal; and
the threshold comparison module is configured to output the fault signal when the voltage signal is not within the preset electrical signal threshold range.

Optionally, the programming module further includes a second switch module, where one end of the second switch module is connected to the output end of the threshold comparison module, and the other end of the second switch module is connected to the input end of the switch control module.

Optionally, the programming module includes a programmable chip.

Optionally, there are three power drive devices, and the drive signals output by the three power drive devices are used to drive a motor.

A third aspect of the embodiments of the present disclosure provides a control apparatus for a drive system, applied to a microcontroller unit of the drive system, including:
an obtaining module, configured to obtain electrical signals corresponding to a plurality of power drive devices in the drive system;
a determining module, configured to determine, based on the electrical signals, a quantity of faulty power drive devices; and
a first control module, configured to control the plurality of power drive devices to output drive signals when the quantity of faulty power drive devices is less than or equal to a preset quantity threshold.

A fourth aspect of the embodiments of the present disclosure provides a computer-readable storage medium having computer program instructions stored thereon, and the program instructions, when executed by a first processor, causes steps of the control method for a drive system provided in the second aspect of the embodiments of the present disclosure to be implemented.

A fifth aspect of the embodiments of the present disclosure provides is a vehicle, including the drive system provided in the second aspect of the embodiments of the present disclosure.

The embodiments of the present disclosure have the following technical effects.

In the embodiments of the present disclosure, by setting the preset quantity threshold, the plurality of power drive devices are controlled to output the drive signals when it is determined that the quantity of faulty power drive devices is less than or equal to the preset quantity threshold. Therefore, even when a few power drive devices in the drive system fail, other power drive devices that do not fail can still be controlled to support normal operation of the drive system and ensure normal driving of the vehicle, which implements a fault masking function, thereby still ensuring normal operation of the drive system and driving in case of a failure, and enriching functions of the vehicle. It is also possible to mitigate degradation of driver experience resulting from a mid-journey vehicle breakdown induced by failures of a part of power drive devices.

Other features and advantages of the present disclosure will be described in detail in the following section DETAILED DESCRIPTION OF PREFERRED EMBODIMENTS.

### BRIEF DESCRIPTION OF THE DRAWINGS

The accompanying drawings are used to provide further understanding of the present disclosure and constitute a part of this specification. Together with the following specific implementations, they are used to explain the present disclosure, but do not constitute a limitation on the present disclosure. In the accompanying drawings:
FIG. 1 is a schematic diagram of a structure of a drive system protection module;
FIG. 2 is a schematic diagram of a structure of another drive system protection module;
FIG. 3 is a flowchart of a control method for a drive system according to an exemplary embodiment;
FIG. 4 is a schematic diagram of a structure of a drive system according to an exemplary embodiment;
FIG. 5 is a schematic diagram of a structure of an exemplary drive system according to an exemplary embodiment;
FIG. 6 is a flowchart of another control method for a drive system according to an exemplary embodiment;
FIG. 7 is a block diagram of a control apparatus for a drive system according to an exemplary embodiment; and
FIG. 8 is a block diagram of a vehicle according to an exemplary embodiment.

### DETAILED DESCRIPTION OF PREFERRED EMBODIMENTS

Exemplary embodiments will be described in detail herein, examples of which are shown in the accompanying drawings. When the following description relates to the accompanying drawings, unless otherwise indicated, the same numbers in different accompanying drawings represent the same or similar elements. The implementations described in the following exemplary embodiments do not represent all implementations consistent with the present disclosure. Rather, they are merely examples of apparatus and methods consistent with some aspects of the present disclosure as detailed in the appended claims.

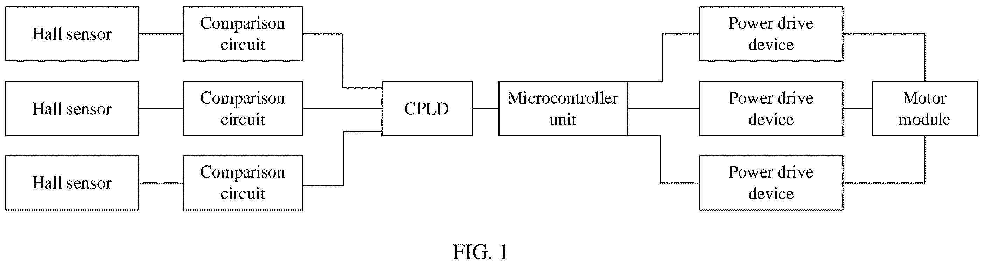

In related technologies, as shown in a schematic diagram of a structure of a drive system protection module in FIG. 1, an output end of each of a plurality of Hall sensors is connected to an input end of one comparison circuit, and output ends of the comparison circuits are connected to an input end of a CPLD (Complex Programmable logic device, complex programmable logic device), an output end of the CPLD is connected to an input end of a microcontroller unit (Microcontroller Unit, MCU), an output end of the microcontroller unit is connected to input ends of a plurality of power drive devices, and output ends of the plurality of power drive devices are connected to a motor module. The Hall sensor detects current signals of the plurality of power drive devices in real time and transmits the current signals to the CPLD through the corresponding comparison circuits. The CPLD detects the current signals sent by the Hall sensors in real time. When an abnormal signal such as a current exceeding a threshold occurs, the CPLD executes a protection action, and the CPLD sends a fault signal to the microcontroller unit. The microcontroller unit executes a corresponding protection control strategy to shut down the motor, so as to stop operation of the entire drive system.

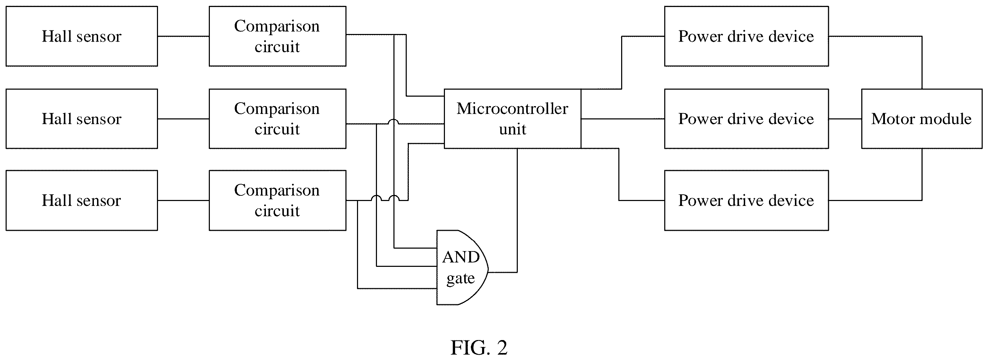

As shown in a schematic diagram of a structure of another drive system protection module in FIG. 2, an output end of each of a plurality of Hall sensors is connected to an input end of one comparison circuit, and output ends of the comparison circuits are all connected to an input end of a microcontroller unit, output ends of the comparison circuits are all connected to an input end of an AND gate, an output end of the AND gate is connected to a control end of the microcontroller unit, an output end of the microcontroller unit is connected to input ends of a plurality of power drive devices, and output ends of the plurality of power drive devices are connected to a motor. The Hall sensor detects current signals of the plurality of power drive devices in real time and transmits the current signals to the corresponding comparison circuits. The comparison circuit detects the signals sent by the Hall sensors in real time. When an abnormal signal such as a current exceeding a threshold occurs, the comparison circuit sends the abnormal signal to the microcontroller unit. The microcontroller unit executes a protection action and a protection control strategy to shut down the entire drive system. In addition, the comparison circuit may alternatively transmit the abnormal signal to the AND gate, and the AND gate outputs a control signal to the microcontroller unit. The microcontroller unit executes a protection action and a protection control strategy to shut down the motor, so as to stop operation of the entire drive system.

In the foregoing two solutions, when one Hall sensor sends out the fault signal (possibly due to a failure of the power drive device or a failure of the Hall sensor itself), the fault signal cannot be disabled, so that the entire drive system is shut down and a vehicle is unable to drive. However, in fact, more than two power drive devices that are normal can still support operation of the drive system and driving.

In addition, both the foregoing two solutions use the Hall sensors and the comparison circuits. The solution in FIG. 1 further uses the CPLD. Both solutions use a large quantity of components, and have relatively low integration levels. The more components, the greater a risk of a plurality of failures. In addition, in the foregoing solutions, the comparison circuits are involved in a path from the Hall sensor outputting the signal to the microcontroller unit executing the protection action. Signal transmission time of this path is about 14µs. There is still room for optimization in implementing rapid protection performance of the drive system.

To solve the foregoing technical problem, embodiments of the present disclosure provide a control method for a drive system, a drive system, an apparatus, a medium, and a vehicle. Solutions proposed in the embodiments of the present disclosure are further described in detail in conjunction with the accompanying drawings.

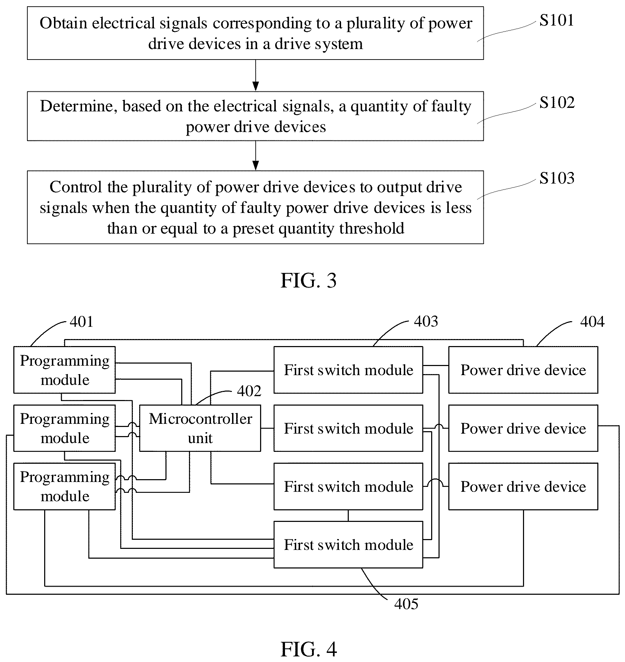

FIG. 3 is a flowchart of a control method for a drive system according to an exemplary embodiment. As shown in FIG. 3, the control method for a drive system is applied to a microcontroller unit of the drive system, and includes the following steps.

S101: Obtain electrical signals corresponding to a plurality of power drive devices in a drive system.

Specifically, a drive system determines operation performance of an electric vehicle. The drive system of the electric vehicle includes a motor, a motor controller, a mechanical transmission, and a wheel end. The mechanical transmission includes a reducer, a transmission shaft, a differential, an axle shaft, or the like. Motor controllers are widely used in various devices that need to be driven by motors. A power drive device is a power device in the motor controller. Power devices commonly used in the motor controllers include two types: IGBT (Insulated Gate Bipolar Transistor, insulated gate bipolar transistor) and MOSFET (Metal-Oxide-Semiconductor Field-Effect Transistor, metal-oxide-semiconductor field-effect transistor). The electrical signal may be a current signal or a voltage signal, where the electrical signal may alternatively be a normal signal or a fault signal.

S102: Determine, based on the electrical signals, a quantity of faulty power drive devices.

In an implementation, the electrical signals are collected by sensors and transmitted to the microcontroller unit. The microcontroller unit determines, based on whether the electrical signals of the plurality of power drive devices fall within a preset electrical signal threshold range, whether the plurality of power drive devices fail and the quantity of faulty power drive devices.

In another implementation, the electrical signals may be obtained by a plurality of programming modules, where each programming module corresponds to one power drive device. In one case, the electrical signal may represent a magnitude of a current or a voltage of the power drive device. The programming module collects the electrical signals of the plurality of power drive devices. The microcontroller unit determines, based on a preset electrical signal threshold, whether the plurality of power drive devices fail and the quantity of faulty power drive devices. In another case, the electrical signal may represent whether a current or a voltage of the power drive device is abnormal, that is, the electrical signal may include the fault signal or the normal signal. Specifically, the programming module obtains the electrical signal of the power drive device, and compares the electrical signal with the preset electrical signal threshold, to output the electrical signal that presents whether the current or voltage is abnormal to the microcontroller unit, and the microcontroller unit determines a quantity of faulty power drive devices based on all the received electrical signals.

S103: Control the plurality of power drive devices to output drive signals when the quantity of faulty power drive devices is less than or equal to a preset quantity threshold.

Specifically, the plurality of power drive devices are all connected to a motor, and the drive signals output by the power drive devices are used to control an output torque of the motor, so as to support operation of the drive system and driving. The motor controller has a plurality of power drive devices. Generally, when a few power drive devices fail, the remaining power drive devices can still support operation of the drive system and driving. Therefore, by setting the preset quantity threshold, the plurality of power drive devices can be controlled to output the drive signals when the quantity of faulty power drive devices is less than or equal to the preset quantity threshold. The preset quantity threshold may be determined based on an empirical value of vehicle testing. For example, when there are three power drive devices, the preset quantity threshold may be set to 1, that is, when the quantity of faulty power drive devices in the drive system is less than or equal to 1, the plurality of power drive devices are controlled to output drive signals. Because there is a faulty power drive device among the plurality of power drive devices, when the microcontroller unit controls the plurality of power drive devices to output the drive signals, the microcontroller unit fails to control the faulty power drive device, that is, the microcontroller unit controls the remaining power drive devices that do not fail to output the drive signals, so as to support operation of the drive system and driving.

In this embodiment of the present disclosure, by setting the preset quantity threshold, the plurality of power drive devices are controlled to output drive signals when it is determined that the quantity of faulty power drive devices is less than or equal to the preset quantity threshold. Therefore, even when a few power drive devices in the drive system fail, other power drive devices that do not fail can still be controlled to support normal operation of the drive system and ensure normal driving of the vehicle, which implements a fault masking function, thereby still ensuring normal operation of the drive system and driving in case of a failure, and enriching functions of the vehicle. It is also possible to mitigate degradation of driver experience resulting from a mid-journey vehicle breakdown induced by failures of a part of power drive devices.

In some embodiments, the method further includes:
controlling the plurality of power drive devices to stop outputting drive signals when the quantity of faulty power drive devices is greater than the preset quantity threshold.

Specifically, when a large quantity of power drive devices fail, the remaining power drive devices cannot support operation of the drive system and driving, and if the remaining power drive devices are forced to support the operation of the drive system, problems such as overload of the motor, overload, too fast speed, the inability to start, or loud noise may be caused, which may damage the motor in severe cases. Therefore, the plurality of power drive devices are controlled to stop outputting drive signals when the quantity of faulty power drive devices is greater than the preset quantity threshold.

It should be noted that the quantity of power drive devices of the motor controller of the vehicle may be determined based on actual situations, and to avoid dangerous driving caused by an excessive failure of the motor controller of the vehicle, the preset quantity threshold may be set to more than half of the quantity of the power drive devices in the motor controller. For example, when there are five power drive devices, the preset quantity threshold may be 2 or 1. When there are four power drive devices, the preset quantity threshold is generally 1, not 2.

In the embodiments of the present disclosure, when the quantity of faulty power drive devices is too large, all the power drive devices are controlled to stop outputting drive signals outwards, so as to ensure driving safety of the vehicle. That is, when the quantity of faulty power drive devices is greater than the preset quantity threshold, all the power drive devices are controlled to stop outputting drive signal regardless of whether there is a power drive device that does not fail.

In some embodiments, controlling the plurality of power drive devices to stop outputting the drive signals when the quantity of faulty power drive devices is greater than the preset quantity threshold includes:
stopping outputting control signals to the plurality of power drive devices when the quantity of faulty power drive devices is greater than the preset quantity threshold, so as to control the plurality of power drive devices to stop outputting the drive signals.

For example, when the microcontroller unit determines that a large quantity of power drive devices fail, the control signals are output to the plurality of power drive devices to stop the plurality of power drive devices from outputting the drive signals, so that the motor stops outputting torque, and the drive system no longer continues to support driving.

In some embodiments, controlling the plurality of power drive devices to output the drive signals when the quantity of faulty power drive devices is less than or equal to the preset quantity threshold includes:
sending the control signals to the plurality of power drive devices, when the quantity of faulty power drive devices is less than or equal to the preset quantity threshold, to control the plurality of power drive devices to output the drive signals.

For example, when the microcontroller unit determines that a few power drive devices fail, the control signals are output to the plurality of power drive devices to control the plurality of power drive devices to output the drive signals, so that the motor outputs torque, to support operation of the drive system and driving.

Therefore, it may be understood that when the quantity of faulty power drive devices is less than or equal to the preset quantity threshold, or when the quantity of faulty power drive devices is greater than the preset quantity threshold, the control signals are output to control statuses of the power drive devices.

In some embodiments, obtaining the electrical signals corresponding to the plurality of power drive devices in the drive system includes:
receiving voltage signals generated by a plurality of programming modules based on current signals sent by the power drive devices.

For example, when the electrical signal is a current signal, the microcontroller unit receives current signals sent by the plurality of programming modules. Each power drive device is correspondingly connected to one programming module. The programming module is configured to obtain the current signal of the corresponding power drive device, process the current signal, and send a processed current signal to the microcontroller unit.

For example, the electrical signal may include a voltage signal or the processed current signal. The power drive device sends the current signal to the programming module to be processed into the voltage signal, or sends the current signal to the microcontroller unit after further processing.

Specifically, each power drive device is correspondingly connected to one programming module. Each programming module correspondingly obtains the current signal of one power drive device, and further processes the current signal, or processes the current signal into the voltage signal and sends the voltage signal to the microcontroller unit. For example, when the plurality of power drive devices fail, each programming module sends the electrical signal of the corresponding power drive device, so that the microcontroller unit may identify current information or voltage information included in all the electrical signals, and may determine the faulty power drive device and the corresponding programming module.

In some embodiments, the method further includes:
receiving fault signals sent by the plurality of programming modules; and
controlling, based on the received fault signal, the plurality of power drive devices to stop outputting drive signals, where
the fault signal is output by the programming module to the microcontroller unit when the electrical signal of the power drive device received by the programming module is not within a preset electrical signal threshold range.

For example, when the electrical signal of the power drive device corresponding to the programming module is not within the preset electrical signal threshold range, the programming module outputs the fault signal to the microcontroller unit. When the electrical signal of the power drive device corresponding to the programming module is within the preset electrical signal threshold range, the programming module outputs a normal signal to the microcontroller unit.

For example, when the electrical signal is the voltage signal, if a voltage represented by the voltage signal is greater than a preset voltage threshold, the programming module sends the fault signal to the microcontroller unit. If the voltage represented by the voltage signal is less than or equal to the preset voltage threshold, the programming module sends the normal signal to the microcontroller unit. When the electrical signal is the current signal, if a current value represented by the current signal exceeds a preset current threshold range, the programming module sends the fault signal to the microcontroller unit. If the current value represented by the current signal falls within the preset current threshold range, the programming module sends the normal signal to the microcontroller unit.

In some embodiments, controlling the plurality of power drive devices to output the drive signals when the quantity of faulty power drive devices is less than or equal to the preset quantity threshold includes:
determining, based on the electrical signal sent by each programming module, a target programming module corresponding to the faulty power drive device, when the quantity of faulty power drive devices is less than or equal to the preset quantity threshold; and
sending a target control signal to the target programming module, so that the target programming module stops, in response to the target control signal, outputting the fault signal and outputs the normal signal, to control the plurality of power drive devices to output the drive signals.

Specifically, in an original logic of the microcontroller unit, when the signals sent by the plurality of programming modules and received by the microcontroller unit include at least one fault signal, the plurality of power drive devices are controlled to stop outputting the drive signals. In this embodiment, when receiving the fault signal, the microcontroller unit determines whether the quantity of fault signals is less than or equal to the preset quantity threshold, that is, determines whether the quantity of faulty power drive devices is less than or equal to the preset quantity threshold. If yes, the microcontroller unit determines, based on the received electrical signals of the plurality of power drive devices sent by the plurality of programming modules, the target programming module corresponding to the faulty power drive device, and controls the target programming module to stop outputting the fault signal and output the normal signal, so as to control the plurality of power drive devices to output the drive signals. If no, the microcontroller unit still controls the plurality of power drive devices to stop outputting the drive signals.

In some embodiments, the method includes:
sending a preset electrical signal threshold to the programming module.

Specifically, the preset electrical signal threshold stored in the programming module is sent by the microcontroller unit. When the drive system operates normally, in an initialization phase, the microcontroller unit writes information such as the preset electrical signal threshold into the programming module through the first output end.

It may be understood that the foregoing control method for a drive system may be applied to the microcontroller unit in the drive system protection module shown in FIG. 1 and FIG. 2, or may be applied to the microcontroller unit in the drive system shown in FIG. 4.

In the drive system protection module shown in FIG. 1 and FIG. 2, the microcontroller unit obtains, based on the plurality of Hall sensors, the electrical signals corresponding to the plurality of power drive devices in the drive system, determines, based on the electrical signals, the quantity of faulty power drive devices, and controls the plurality of power drive devices to output the drive signals when the quantity of faulty power drive devices is less than or equal to the preset quantity threshold. The Hall sensor obtains the current signal of the power drive device.

It should be noted that persons skilled in the art can make adaptive improvements to a structure and a connection relationship of the drive system protection module shown in FIG. 1 and FIG. 2 based on the control method for a drive system provided in embodiments of the present disclosure, so that the microcontroller unit in the drive system protection module shown in FIG. 1 and FIG. 2 can execute the control method for a drive system provided in embodiments of the present disclosure.

As shown in FIG. 4, FIG. 4 is a schematic diagram of a structure of a drive system according to an exemplary embodiment. The drive system includes:
a plurality of power drive devices 404 configured to output drive signals;
a plurality of programming modules 401, where each programming module 401 is correspondingly connected to one power drive device 404, and each programming module 401 is configured to receive an electrical signal sent by the power drive device 404 connected to the programming module; and
a microcontroller unit 402 configured to determine a quantity of faulty power drive devices 404 based on electrical signals sent by the plurality of programming modules 401, and control the plurality of power drive devices 404 to output drive signals when the quantity of faulty power drive devices 404 is less than or equal to a preset quantity threshold.

Specifically, each programming module 401 obtains the electrical signal of the power drive device 404 connected to the programming module 401. The programming module 401 outputs a fault signal or a normal signal based on a relationship between the obtained electrical signal and a preset electrical signal threshold. The microcontroller unit 402 receives the fault signal or the normal signal and controls a status of the power drive device 404.

In some embodiments, the microcontroller unit includes a program running module and a switch control module 405. An output end of the program running module is connected to an input end of the switch control module 405. An output end of the switch control module 405 is connected to input ends of the plurality of power drive devices 404.

The program running module is configured to output control signals, where the control signals are used to enable the power drive devices 404 to output drive signals in response to the control signals.

The switch control module 405 is configured to control a connection/disconnection status of a path between the program running module and the power drive device 404, so as to determine, based on the connection/disconnection status, whether to transmit the control signals to the plurality of power drive devices 404.

Specifically, the program running module may execute a preset program, and output the control signals to control the power drive devices to output the drive signals. When the switch control module controls the path between the program running module and the power drive device to be open, the program running module cannot output the control signal to the power drive device. When the switch control module controls the path between the program running module and the power drive device to be closed, the program running module stops outputting the control signal to the power drive device.

In some embodiments, a first signal input end of each programming module is connected to a first output end of the program running module. A first signal output end of each programming module is connected to a signal input end of the microcontroller unit. A second signal input end of each programming module is connected to a signal output end of one power drive device, and a second signal output end of each programming module is connected to an input end of the switch control module.

The programming module is configured to output the fault signal when the electrical signal sent by the power drive device is not within a preset electrical signal threshold range.

The switch control module is configured to disconnect the path between the program running module and the power drive device when the fault signal output by at least one programming module is received, to control the plurality of power drive devices to stop outputting the drive signals.

Specifically, the programming module outputs the fault signal to the switch control module of the microcontroller unit when the electrical signal sent by the power drive device is not within the preset electrical signal threshold range. When the fault signal output by at least one programming module is received, the switch control module controls to disconnect the path between the program running module and the power drive device, and in this case, the plurality of power drive devices stop outputting the drive signals.

In some embodiments, the switch control module 405 includes a plurality of first switch modules 403 and an AND gate circuit module. Input ends of the plurality of first switch modules 403 are connected to the output end of the program running module. An output end of each first switch module 403 is connected to an input end of one power drive device 404. An output end of the AND gate circuit module is connected to control ends of the plurality of first switch modules 403. An input end of the AND gate circuit module is connected to the second signal output end of each programming module 401.

The AND gate circuit module is configured to control the first switch module 403, when the fault signal output by at least one programming module 401 is received, to disconnect the path between the program running module and the power drive device 404.

For example, in the switch control module, the connection/disconnection statuses of the paths between the program running module and the power drive devices are controlled by controlling status of the plurality of first switch modules.

For example, an AND gate is provided with a plurality of input ends and an output end. When all inputs are high at the same time, an output is high, and otherwise, the output is low. That is, a judgment is made based on a plurality of input signals. As long as one or more signals output a low level, an output signal is low.

Specifically, the second signal output end of each programming module is connected to the input end of the switch control module. The switch control module receives the normal signal or the fault signal output by the plurality of programming modules, and controls to output a low level when the received signals output by the plurality of programming modules include the fault signal, so that the microcontroller unit controls the plurality of power drive devices to stop outputting the drive signals based on the received low level, or controls to output a high level when the received signals output by the plurality of programming modules are all normal signals, so that the microcontroller unit controls the plurality of power drive devices to output the drive signals based on the received high level.

In related technologies, a comparison circuit is involved in a path from a Hall sensor outputting a signal to a microcontroller unit executing a protection action, and signal transmission time of this path is about 14µs. In the embodiments of the present disclosure, only an AND gate circuit is involved in a path from the first switch module of the programming module outputting the fault signal to the microcontroller unit making a response and executing the protection action, and signal transmission time of this path is less than 0.5µs. Therefore, a speed of protecting the entire drive system can be greatly improved by using the foregoing AND gate circuit.

In some embodiments, the programming module includes a signal conversion module and a threshold comparison module. An input end of the signal conversion module is connected to a signal output end of the power drive device. An output end of the signal conversion module is connected to an input end of the threshold comparison module. An output end of the threshold comparison module is connected to the input end of the switch control module.

The signal conversion module is configured to receive a current signal sent by the power drive device, and convert the current signal into a voltage signal.

The threshold comparison module is configured to output a fault signal when the voltage signal is not within the preset electrical signal threshold range.

Specifically, the signal conversion module may convert the current signal sent by the power drive device into the voltage signal or further process the current signal. The threshold comparison module may output the fault signal when the voltage signal is not within the preset electrical signal threshold range.

In some embodiments, each programming module includes a second switch module. One end of the second switch module is connected to the programming module, the other end of the second switch module is connected to the switch control module, and a control end of the second switch module is connected to the programming module.

Specifically, the programming module is configured to control the second switch module to disconnect the programming module from the switch control module when a voltage or current in the electrical signal is not within the preset electrical signal threshold range, so that the second switch module outputs a low-level signal, where the low-level signal is the fault signal. When the current in the electrical signal is greater than the preset electrical signal threshold, the programming module controls the second switch module to communicate the programming module with the switch control module, so that the second switch module outputs a high-level signal, where the high-level signal is the normal signal.

In some embodiments, the programming module includes a programmable chip.

Specifically, compared with a solution in which a Hall sensor, a CPLD, and a comparison circuit are used in the related technologies, a large quantity of components are used. In the embodiments of the present disclosure, by using the programmable chip, current data of the power drive device can be collected, the current data can be processed, and output of the fault signal or the abnormal signal to the microcontroller unit can be controlled. Therefore, the programmable module integrates functions of the Hall sensor, the CPLD, and the comparison circuit, and has a high integration level, which reduces a risk of a plurality of failures.

In some embodiments, there are three power drive devices, and drive signals output by the three power drive devices are used to drive a motor.

In the embodiments of the present disclosure, the preset quantity threshold is set, and when the microcontroller unit 402 determines that the quantity of faulty power drive devices 404 is less than or equal to the preset quantity threshold, the plurality of power drive devices 404 are controlled to output the drive signals. Therefore, even when a few power drive devices 404 in the drive system fail, other power drive devices 404 that do not fail can still be controlled to support normal operation of the drive system, and normal driving of the vehicle can be ensured, which implements a fault masking function, thereby still ensuring normal operation of the drive system and driving in case of a failure, and enriching functions of the vehicle. It is also possible to mitigate degradation of driver experience resulting from a mid-journey vehicle breakdown induced by failures of a part of power drive devices 404.

With continued reference to FIG. 4, the drive system includes:
a power drive module, including a plurality of power drive devices 404;
a microcontroller unit 402, where the microcontroller unit 402 includes a plurality of first switch modules 403 and a switch control module 405, one end of each first switch module 403 is connected to the microcontroller unit 402, the other end of each first switch module 403 is connected to one power drive device 404, and an output end of the switch control module 405 is connected to a control end of each first switch module 403; and
a plurality of programming modules 401, where a first signal input end of each programming module 401 is connected to a first output end of the microcontroller unit 402, a first signal output end of each programming module 401 is connected to a signal input end of the microcontroller unit 402 by using a signal collection module, a second signal input end of each programming module 401 is connected to a signal output end of one power drive device 404 and a second signal output end of each programming module 401 is connected to an input end of the switch control module 405, and an output end of the switch control module 405 is connected to a signal input end of the microcontroller unit 402.

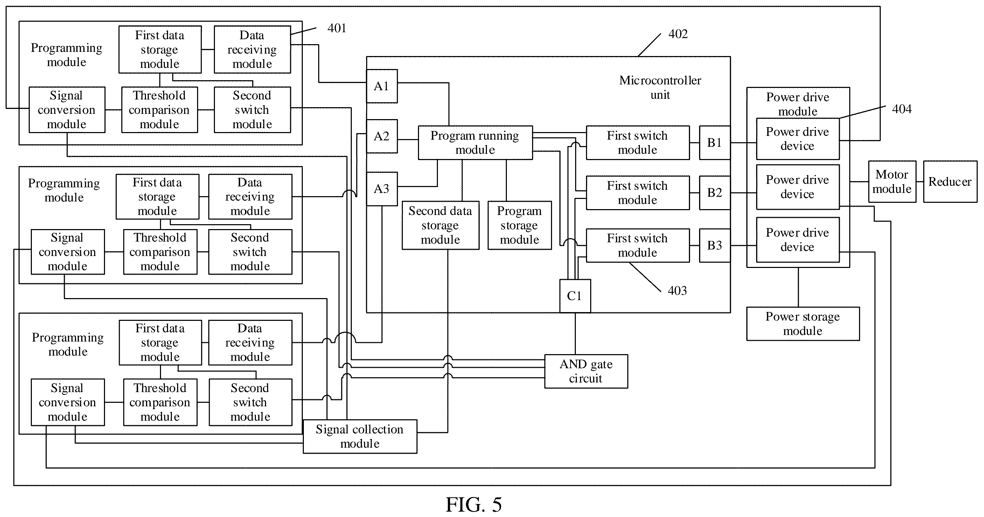

In some embodiments, with reference to FIG. 5, FIG. 5 is a schematic diagram of a structure of an exemplary drive system according to an exemplary embodiment. As shown in FIG. 5, the programming module 401 includes:
a signal conversion module, where an input end of the signal conversion module is connected to the power drive device 404, and a first output end of the signal conversion module is connected to an input end of the signal collection module;
a threshold comparison module, where a first input end of the threshold comparison module is connected to a second output end of the signal conversion module;
a second switch module, where a first input end of the second switch module is connected to an output end of the threshold comparison module; and
a data receiving module, where an input end of the data receiving module is connected to the first output end of the microcontroller unit 402, and an output end of the data receiving module is connected to an input end of a first data storage module; and a first output end of the first data storage module is connected to a second input end of the threshold comparison module, and a second output end of the first data storage module is connected to a second input end of the second switch module.

In some embodiments, the microcontroller unit 402 includes:
a program storage module having a computer program stored thereon;
a program running module, where a first input end of the program running module is connected to an output end of the program storage module, configured to execute the computer program of the program storage module, and a first output end of the program running module is connected to the input end of the data receiving module in the programming module 401;
a second data storage module, where the second data storage module is connected to an output end of the signal collection module, and an output end of the second data storage module is connected to a second input end of the program running module;
a plurality of first switch modules 403, where one end of each first switch module 403 is connected to the program running module, the other end of each first switch module 403 is connected to one power drive device 404, and an output end of a switch control module 405 is connected to a control end of each first switch module 403; and
a switch control module 405, including an AND gate circuit, where output ends of a plurality of second switch modules are connected to a plurality of input ends of the AND gate circuit, and output ends of the AND gate circuit are connected to the plurality of first switch modules 403.

The drive system further includes a power storage module, a motor module, and a reducer, where the power storage module is connected to the power drive module, an output end of the power drive module is connected to an input end of the motor module, and an output end of the motor module is connected to the reducer.

The microcontroller unit 402 includes a plurality of interfaces. For example, the first output end of the program running module is connected to the input ends of the data receiving modules in the plurality of programming modules 401 through interfaces A1, A2, and A3 respectively. The other ends of the first switch modules 403 are connected to one power drive device 404 through interfaces B1, B2, and B3 respectively. An output end of the switch control module 405 is connected to the plurality of first switch modules 403 through an interface C1.

It should be noted that, in FIG. 5, only a drive system including three power drive devices 404 is used as an example. Correspondingly, there are three programming modules 401. In an actual application process, a quantity of power drive devices 404 depends on an actual situation. However, connection relationships between the microcontroller unit 402, the plurality of power drive devices 404, and the plurality of programming modules 401 are still as shown in FIG. 5.

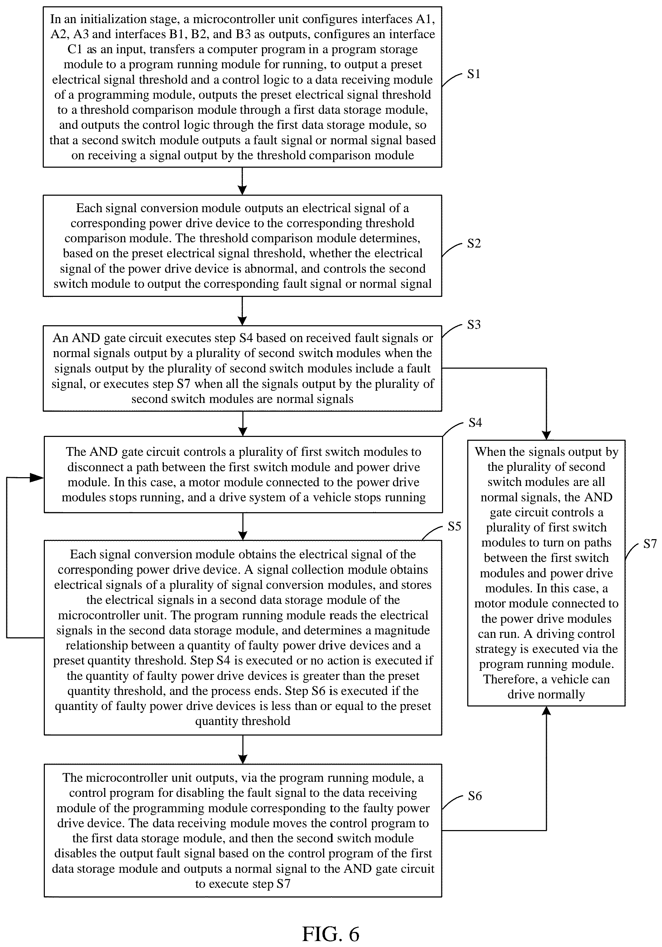

Specifically, for the structural example of the foregoing drive system, with reference to a flowchart of another control method for a drive system shown in FIG. 6, the control method for a drive system includes:
S1: In an initialization stage, a microcontroller unit configures interfaces A1, A2, A3 and interfaces B1, B2, and B3 as outputs, configures an interface C1 as an input, transfers a computer program in a program storage module to a program running module for running, to output a preset electrical signal threshold and a control logic to a data receiving module of a programming module, outputs the preset electrical signal threshold to a threshold comparison module through a first data storage module, and outputs the control logic through the first data storage module, so that a second switch module outputs a fault signal or normal signal based on receiving a signal output by the threshold comparison module.
S2: Each signal conversion module outputs an electrical signal of a corresponding power drive device to the corresponding threshold comparison module. The threshold comparison module determines, based on the preset electrical signal threshold, whether the electrical signal of the power drive device is abnormal, and controls the second switch module to output the corresponding fault signal or normal signal.
S3: An AND gate circuit executes step S4 based on received fault signals or normal signals output by a plurality of second switch modules when the signals output by the plurality of second switch modules include a fault signal, or executes step S7 when all the signals output by the plurality of second switch modules are normal signals.
S4: The AND gate circuit controls a plurality of first switch modules to disconnect a path between the first switch module and power drive module. In this case, a motor module connected to the power drive modules stops running, and a drive system of a vehicle stops running.
S5: Each signal conversion module obtains the electrical signal of the corresponding power drive device. A signal collection module obtains electrical signals of a plurality of signal conversion modules, and stores the electrical signals in a second data storage module of the microcontroller unit. The program running module reads the electrical signals in the second data storage module, and determines a magnitude relationship between a quantity of faulty power drive devices and a preset quantity threshold. Step S4 is executed or no action is executed if the quantity of faulty power drive devices is greater than the preset quantity threshold, and the process ends. Step S6 is executed if the quantity of faulty power drive devices is less than or equal to the preset quantity threshold.
S6: The microcontroller unit outputs, via the program running module, a control program for disabling the fault signal to the data receiving module of the programming module corresponding to the faulty power drive device. The data receiving module moves the control program to the first data storage module, and then the second switch module disables the output fault signal based on the control program of the first data storage module and outputs a normal signal to the AND gate circuit to execute step S7.
S7: When the signals output by the plurality of second switch modules are all normal signals, the AND gate circuit controls a plurality of first switch modules to turn on paths between the first switch modules and power drive modules. In this case, a motor module connected to the power drive modules can run. A driving control strategy is executed via the program running module. Therefore, a vehicle can drive normally.

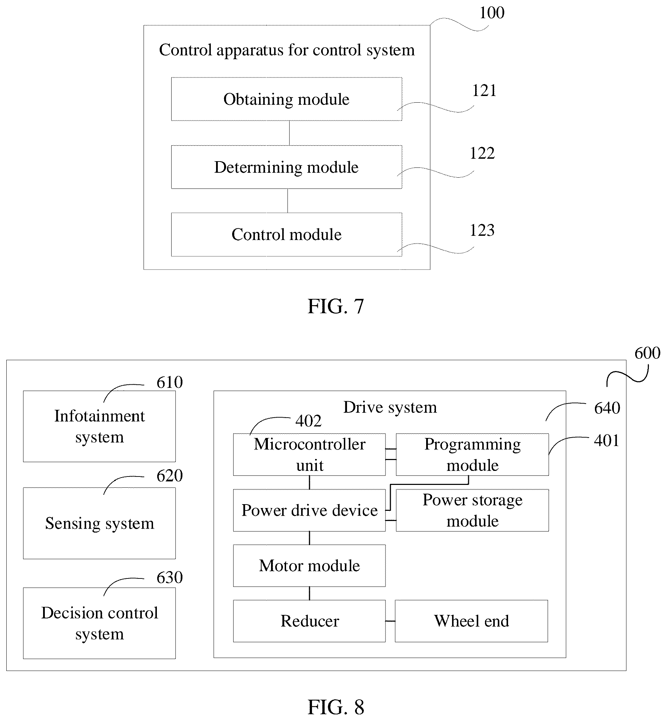

FIG. 7 is a block diagram of a control apparatus 100 for a drive system according to an exemplary embodiment. With reference to FIG. 7, the control apparatus 100 for a drive system is applied to a microcontroller unit of the drive system, and includes an obtaining module 121, a determining module 122, and a control module 123.

The obtaining module 121 is configured to obtain electrical signals corresponding to a plurality of power drive devices in the drive system.

The determining module 122 is configured to determine, based on the electrical signals, a quantity of faulty power drive devices.

The first control module 123 is configured to control the plurality of power drive devices to output drive signals when the quantity of faulty power drive devices is less than or equal to a preset quantity threshold.

In some embodiments, the control apparatus 100 for a drive system further includes:
a second control module configured to control the plurality of power drive devices to stop outputting the drive signals when the quantity of faulty power drive devices is greater than the preset quantity threshold.

In some embodiments, the second control module is configured to:
stop outputting control signals to the plurality of power drive devices when the quantity of faulty power drive devices is greater than the preset quantity threshold, so as to control the plurality of power drive devices to stop outputting the drive signals.

In some embodiments, the first control module 123 is configured to:
send the control signals to the plurality of power drive devices, when the quantity of faulty power drive devices is less than or equal to the preset quantity threshold, to control the plurality of power drive devices to output the drive signals.

In some embodiments, the obtaining module 121 includes:
a receiving submodule configured to receive voltage signals generated by a plurality of programming modules based on current signals sent by the power drive devices.

In some embodiments, the control apparatus 100 for a drive system further includes:
a fault signal receiving module configured to receive fault signals sent by the plurality of programming modules; and
a control output module configured to control, based on the received fault signal, the plurality of power drive devices to stop outputting drive signals, where
the fault signal is output by the programming module to the microcontroller unit when the electrical signal of the power drive device received by the programming module is not within a preset electrical signal threshold range.

In some embodiments,
the first control module 123 includes:
a determining submodule configured to determine, based on the electrical signal sent by each programming module, a target programming module corresponding to a faulty power drive device, when the quantity of faulty power drive devices is less than or equal to the preset quantity threshold; and
a control submodule configured to send a target control signal to the target programming module, so that the target programming module stops, in response to the target control signal, outputting the fault signal and outputs a normal signal, to control the plurality power drive devices to output drive signals.

In some embodiments, the control apparatus 100 for a drive system further includes:
a sending module configured to send a preset electrical signal threshold to the programming module.

For the control apparatus 100 for a drive system in the foregoing embodiment, a specific manner in which each module performs an operation has been described in detail in the embodiments of the control method for a drive system, and will not be described in detail herein.

To implement the foregoing objective, an embodiment of the present disclosure further provides a computer-readable storage medium having computer program instructions stored thereon, and the program instructions, when executed by a first processor, causes steps of the foregoing control method for a drive system to be implemented.

To implement the foregoing objective, an embodiment of the present disclosure further provides a vehicle, including:
the drive system according to the embodiments of the present disclosure.

With reference to FIG. 8, FIG. 8 is a block diagram of a vehicle 600 according to an exemplary embodiment. For example, the vehicle 600 may be a hybrid vehicle, or may be a non-hybrid vehicle, an electric vehicle, a fuel cell vehicle, or other types of vehicles. The vehicle 600 may be an autonomous vehicle, a semi-autonomous vehicle, or a non-autonomous vehicle.

The vehicle 600 may include various subsystems, such as an infotainment system 610, a sensing system 620, a decision control system 630, and a drive system 640 described above. The vehicle 600 may further include more or fewer subsystems, and each subsystem may include a plurality of components. In addition, each subsystem and each component of the vehicle 600 may be interconnected in a wired or wireless manner.

In some embodiments, the drive system 640 may include a microcontroller unit 402, a power drive module, a motor module, a reducer, and a wheel end that are connected in sequence. The power drive module includes a plurality of power drive devices. The drive system 640 further includes a plurality of programming modules 401 and a power storage module. The power storage module is configured to provide power for the power drive module. A first signal input end of the programming module 401 is connected to a first output end of the microcontroller unit 402. A first signal output end of the programming module 401 is connected to a signal input end of the microcontroller unit 402. A second signal input end of each programming module 401 is connected to a signal output end of one power drive device. The microcontroller unit 402, the plurality of power drive devices, and the plurality of programming modules 401 may execute the foregoing control method for a drive system.

Specifically, if all signals output by the plurality of programming modules 401 are normal signals, a high level is output, so that the microcontroller unit 402 controls, based on the received high level, the plurality of power drive devices to output drive signals. The power storage module provides power for the plurality of power drive devices. The plurality of power drive devices control an action of the motor module, and in this case, the motor module drives the reducer to act and drives the wheel end to act, so that the vehicle 600 can drive normally. If the signals output by the plurality of programming modules 401 include a fault signal, a low level is output, so that the microcontroller unit 402 controls, based on the received low level, the plurality of power drive devices to stop outputting drive signals, the motor module is shut down, and the vehicle mechanism stops driving.

In some embodiments, the infotainment system 610 may include a communication system, an entertainment system, a navigation system, or the like.

The sensing system 620 may include several types of sensors for sensing information about an environment surrounding the vehicle 600. For example, the sensing system 620 may include a global positioning system (the global positioning system may be a GPS system, or may be a BeiDou system or other positioning system), an inertial measurement unit (inertial measurement unit, IMU), a laser radar, a millimeter wave radar, an ultrasonic radar, and a camera apparatus.

The decision control system 630 may include a computing system, a vehicle control unit, a steering system, a throttle, and a braking system.

In another exemplary embodiment, a computer program product is further provided. The computer program product includes a computer program executable by a programmable apparatus. The computer program has a code portion that, when executed by the programmable apparatus, executes the foregoing control method for a drive system.

Other implementation solutions of the present disclosure will readily occur to those skilled in the art after considering this specification and practice of the present disclosure. This is intended to cover any variation, application, or adaptation of the present disclosure, which follows the general principles of the present disclosure and includes common sense or common technical means in the technical field that are not disclosed in the present disclosure. This specification and embodiments are to be regarded as exemplary only, and the true scope and spirit of the present disclosure are indicated by the following claims.

It should be understood that the present disclosure is not limited to the precise structure already described above and shown in the drawings, and various modifications and changes may be made without departing from the scope thereof. The scope of the present disclosure is limit only by the appended claims.

## Claims

1. A control method for a drive system (640), applied to a microcontroller unit (402) of the drive system (640), comprising:
obtaining electrical signals corresponding to a plurality of power drive devices (404) in the drive system (640) (S101);
determining, based on the electrical signals, a quantity of faulty power drive devices (404) (S102); and
controlling the plurality of power drive devices (404) to output drive signals when the quantity of faulty power drive devices (404) is less than or equal to a preset quantity threshold (S103).

2. The method according to claim 1, wherein the method further comprises:
controlling the plurality of power drive devices (404) to stop outputting drive signals when the quantity of faulty power drive devices (404) is greater than the preset quantity threshold.

3. The method according to claim 2, wherein controlling the plurality of power drive devices (404) to stop outputting the drive signals when the quantity of faulty power drive devices (404) is greater than the preset quantity threshold comprises:
stopping outputting control signals to the plurality of power drive devices (404) when the quantity of faulty power drive devices (404) is greater than the preset quantity threshold, to control the plurality of power drive devices (404) to stop outputting the drive signals.

4. The method according to any one of claims 1 to 3, wherein controlling the plurality of power drive devices (404) to output the drive signals when the quantity of faulty power drive devices (404) is less than or equal to the preset quantity threshold comprises:
sending control signals to the plurality of power drive devices (404) when the quantity of faulty power drive devices (404) is less than or equal to the preset quantity threshold, to control the plurality of power drive devices (404) to output the drive signals.

5. The method according to any one of claims 1 to 4, wherein obtaining the electrical signals corresponding to the plurality of power drive devices (404) in the drive system (640) comprises:
receiving voltage signals generated by a plurality of programming modules (401) based on current signals sent by the power drive devices (404).

6. The method according to any one of claims 1 to 5, wherein the method further comprises:
receiving fault signals sent by a plurality of programming modules (401); and
controlling, based on the received fault signal, the plurality of power drive devices (404) to stop outputting the drive signals, wherein
the fault signal is output by the programming module (401) to the microcontroller unit (402) when the electrical signal of the power drive device (404) received by the programming module (401) is not within a preset electrical signal threshold range.

7. The method according to claim 6, wherein controlling the plurality of power drive devices (404) to output the drive signals when the quantity of faulty power drive devices (404) is less than or equal to the preset quantity threshold comprises:
determining, based on the electrical signal sent by each programming module (401), a target programming module corresponding to a faulty power drive device (404) when the quantity of faulty power drive devices (404) is less than or equal to the preset quantity threshold; and
sending a target control signal to the target programming module, so that the target programming module stops, in response to the target control signal, outputting the fault signal and outputs a normal signal, to control the plurality of power drive devices (404) to output the drive signals.

8. The method according to claim 6, wherein the method further comprises:
sending the preset electrical signal threshold to the programming module (401).

9. A drive system (640), comprising:
a plurality of power drive devices (404), configured to output drive signals;
a plurality of programming modules (401), wherein each programming module (401) is correspondingly connected to one power drive device (404), and each programming module (401) is configured to receive an electrical signal sent by the power drive device (404) connected to the programming module; and
a microcontroller unit (402), configured to determine a quantity of faulty power drive devices (404) based on electrical signals sent by the plurality of programming modules (401), and control the plurality of power drive devices (404) to output drive signals when the quantity of faulty power drive devices (404) is less than or equal to a preset quantity threshold.

10. The drive system (640) according to claim 9, wherein the microcontroller unit (402) comprises a program running module and a switch control module (405), an output end of the program running module is connected to an input end of the switch control module (405), and an output end of the switch control module (405) is connected to input ends of the plurality of power drive devices (404);
the program running module is configured to output control signals, wherein the control signal is used to enable the power drive device (404) to output the drive signal in response to the control signal; and
the switch control module (405) is configured to control a connection/disconnection status of a path between the program running module and the power drive device (404), so as to determine, based on the connection/disconnection status, whether to transmit the control signals to the plurality of power drive devices (404).

11. The drive system (640) according to claim 10, wherein a first signal input end of each programming module (401) is connected to a first output end of the program running module, a first signal output end of each programming module (401) is connected to a signal input end of the microcontroller unit (402), a second signal input end of each programming module (401) is connected to a signal output end of one power drive device (404), and a second signal output end of each programming module (401) is connected to an input end of the switch control module (405);
the programming module (401) is configured to output a fault signal when the electrical signal sent by the power drive device (404) is not within a preset electrical signal threshold range; and
the switch control module (405) is configured to disconnect the path between the program running module and the power drive device (404) when the fault signal output by at least one of the programming modules (401) is received, to control the plurality of power drive devices (404) to stop outputting the drive signals.

12. The drive system (640) according to claim 10, wherein the switch control module (405) comprises a plurality of first switch modules (403) and an AND gate circuit module, input ends of the plurality of first switch modules (403) are connected to the output end of the program running module, an output end of each first switch module (403) is connected to an input end of one power drive device (404), an output end of the AND gate circuit module is connected to control ends of the plurality of first switch modules (403), and an input end of the AND gate circuit module is connected to a second signal output end of each programming module (401); and
the AND gate circuit module is configured to control the first switch module (403), when the fault signal output by at least one of the programming modules (401) is received, to disconnect the path between the program running module and the power drive device (404).

13. The drive system (640) according to claim 11, wherein the programming module (401) comprises a signal conversion module and a threshold comparison module, an input end of the signal conversion module is connected to a signal output end of the power drive device (404), an output end of the signal conversion module is connected to an input end of the threshold comparison module, and an output end of the threshold comparison module is connected to the input end of the switch control module (405);
the signal conversion module is configured to receive a current signal sent by the power drive device (404), and convert the current signal into a voltage signal; and
the threshold comparison module is configured to output the fault signal when the voltage signal is not within the preset electrical signal threshold range.

14. The drive system (640) according to claim 13, wherein the programming module (401) further comprises a second switch module, one end of the second switch module is connected to the output end of the threshold comparison module, and the other end of the second switch module is connected to the input end of the switch control module (405).

15. The drive system (640) according to any one of claims 9 to 14, wherein the programming module (401) comprises a programmable chip.

16. The drive system (640) according to any one of claims 9 to 15, wherein there are three power drive devices (404), and the drive signals output by the three power drive devices (404) are used to drive a motor.

17. A control apparatus (100) for a drive system, applied to a microcontroller unit (402) of the drive system (640), comprising:
an obtaining module (121), configured to obtain electrical signals corresponding to a plurality of power drive devices (404) in the drive system;
a determining module (122), configured to determine, based on the electrical signals, a quantity of faulty power drive devices (404); and
a first control module (123), configured to control the plurality of power drive devices (404) to output drive signals when the quantity of faulty power drive devices (404) is less than or equal to a preset quantity threshold.

18. A computer-readable storage medium, having computer program instructions stored thereon, wherein when the program instructions are executed by a first processor, steps of the method according to any one of claims 1 to 8 is implemented.

19. A vehicle, comprising the drive system (640) according to any one of claims 9 to 16.
